# EUROPÄISCHE PATENTSCHRIFT

(11) **EP 1 931 180 B1**
(45) Veröffentlichungstag und Bekanntmachung des Hinweises auf die Patenterteilung: **15.09.2010**
(21) Anmeldenummer: 07117135.9
(22) Anmeldetag: 25.09.2007
(51) Int. Cl.: H05B 37/02

(54) **Steuerbare Beleuchtungsanlage**
Adjustable illumination assembly
Installation d'éclairage pouvant être commandée

(30) Priorität: 07.12.2006 DE 102006057755
(43) Veröffentlichungstag der Anmeldung: 11.06.2008
(73) Patentinhaber: Zumtobel Lighting GmbH, 6850 Dornbirn (AT)
(72) Erfinder: Mangold, Werner, 6912 Hörbranz (AT)
(74) Vertreter: Thun, Clemens

(56) Entgegenhaltungen:
- WO-A-99/56262
- WO-A-2004/049767
- DE-A1- 10 307 474

## Beschreibung

Die Erfindung betrifft eine steuerbare Beleuchtungsanlage für Räume oder außen liegende Bereiche, in denen sich Individuen aufhalten können.

Unter dem Begriff "Individuum" sollen nachfolgend, vor allem Menschen, aber auch andere Lebewesen, wie Haus- und Nutztiere verstanden werden.

Bestehende Steuerungen von Beleuchtungsanlagen nehmen bisher wenig bis gar keine Rücksicht auf die Benutzer der Anlage. Es ist lediglich bekannt, Beleuchtungsanlagen in Abhängigkeit vom Tageslicht, oder von der Zeit oder von der Bewegung der im Bereich der Beleuchtungsanlage befindlichen Individuen zu steuern.

Aus der WO 99/56262 ist ein Steuerungssystem für die Gebäudeautomation bekannt, das mit menschlichen physiologischen Signalen gesteuert wird. Das System umfasst ein Handband, das physiologische Daten seines Trägers erfasst und per Funk an einen Empfänger weiterleitet. In Abhängigkeit der empfangenen Signale kann die Beleuchtung gesteuert werden.

Aus der WO 2004/049767 A1 ist eine steuerbare Beleuchtungsanlage für einen Raum bekannt, bei der mittels einer Videokamera und eines Mikrofons erfasst werden kann, ob sich ein Mensch in dem zu beleuchtenden Raum befindet. Die Beleuchtung wird in Abhängigkeit von den Signalen, die von der Videokamera und dem Mikrofon erzeugt werden, gesteuert.

Aus der DE 103 07 474 A1 ist eine Elektro-Hausinstallation mit Lichtschaltern bekannt. Bei dieser Anlage ist den Benutzern der Hausinstallation jeweils ein Transponder zugeordnet, der zur aktiven Kommunikation mit den Schaltern geeignet ist.

Der Erfindung liegt die Aufgabe zugrunde, eine Möglichkeit zu eröffnen, eine Beleuchtungsanlage in Abhängigkeit von Informationen zu steuern, die spezifisch für ein bestimmtes Individuum sind.

Die Lösung der Aufgabe besteht darin, dass jedem Individuum ein Kommunikationselement zugeordnet ist, das zur aktiven oder passiven Kommunikation mit der Beleuchtungsanlage geeignet ist und die Anwesenheit des Individuums sowie ggf. seine Zugehörigkeit zu einer Gruppe von Individuen meldet, und dass in der Beleuchtungsanlage individuumspezifische oder gruppenspezifische Steuerinformationen gespeichert sind, die bei Meldung der Anwesenheit oder fehlender Meldung einer Anwesenheit abgerufen und in Steuerbefehle für die Beleuchtungsanlage umgesetzt werden.

Eine Weiterbildung der Erfindung kann ferner darin bestehen, dass in den Meldungen der Kommunikationselemente zusätzlich Hinweise auf die Position, die Blendung, die Art der Sehaufgabe oder das Befinden des Individuums enthalten sind.

Auf diese Weise ist es möglich, die Leuchten bestmöglich anzusteuern. In Einzelbüros kann so die Beleuchtung optimal an das Individuum angepasst werden. In Großraumbüros sind entsprechende Algorithmen nötig, damit die Beleuchtungsanlage so gesteuert werden kann, dass sie optimal für möglichst viele Anwender eingestellt ist. Mit der Position des Individuums werden z.B. einzelne Leuchten oder Leuchtengruppen zurückgedimmt oder abgeschaltet, wenn sich kein Benutzer darunter befindet. Hierfür ist nicht einmal eine genaue Position des Benutzers notwendig, sondern nur ein Abstand des Benutzers zur Leuchte. Dieser kann z.B. über Signallaufzeiten ermittelt werden. Weiterhin ist es möglich, die Beleuchtungssituation an die Sehaufgabe anzupassen. Die notwendige Beleuchtungsstärke bei Bildschirmarbeit ist eine andere als bei Schreib-Lesetätigkeiten am Schreibtisch.

Es ist ferner möglich, auf diese Weise die dynamische Veränderung der Abstrahlcharakteristik von Leuchten zur Vermeidung von Blendungen der Anwender zu verändern. Die Beleuchtungsanlage kann ferner so gesteuert werden, dass sie auf das Befinden der Benutzer reagiert.

Die Kommunikationselemente sind Videokameras. Im Falle einer Ausbildung der Kommunikationselemente als Videokamera sollten diese so an dem Individuum angebracht werden, dass sie der Blickrichtung des Individuums folgen.

Die Videokamera ist in einer Brille oder einem Headset integriert. Bei entsprechender Miniaturisierung der Videokamera kann diese an der Stirn eines Individuums befestigt werden. In diesem Falle ist es zweckmäßig, zusätzlich ein Eye Tracking System vorzusehen, damit die Videokamera das Bild aufnimmt, was das Individuum mit seinen Augen sieht.

Die von der Videokamera abgegebenen Bildinformationssignale können über eine Bildauswertungssoftware ausgewertet werden, um dadurch die Sehaufgabe oder eine evtl. vorhandene Blendung erkennbar zu machen.

Die erfindungsgemäße Lösung eröffnet ferner die Möglichkeit, dass den Kommunikationselementen Informationen über die Gehirnströme der ihnen zugeordneten Individuen zugeführt werden, die von den Kommunikationselementen an die Beleuchtungsanlage weitergeleitet werden, um damit eine Blendung der Individuen zu vermeiden.

Die erfindungsgemäße Idee ist nicht auf Menschen beschränkt. Es ist auch denkbar, dass die Individuen Nutztiere, bspw. Kühe oder Schweine, in Ställen sind.

## Patentansprüche

1. Steuerbare Beleuchtungsanlage für Räume oder außen liegende Bereiche, in denen sich Individuen aufhalten können, aufweisend
Kommunikationselemente, die derart gestaltet sind, dass jedem Individuum eines der Kommunikationselemente zugeordnet werden kann, wobei das Kommunikationselement zur aktiven oder passiven Kommunikation mit der Beleuchtungsanlage geeignet ist und die Anwesenheit des Individuums und ggf. seine Zugehörigkeit zu einer Gruppe von Individuen meldet, und dass in der Beleuchtungsanlage individuumsspezifische oder gruppenspezifische Steuerinformationen gespeichert sind, die bei Meldung der Anwesenheit oder fehlender Meldung einer Anwesenheit abgerufen und in Steuerbefehle für die Beleuchtungsanlage umgesetzt werden,
**dadurch gekennzeichnet,**
**dass** das Kommunikationselement eine in einer Brille oder in einem Headset integrierte Videokamera ist, die so an dem Individuum angebracht werden kann, dass sie der Blickrichtung des Individuums folgt,
wobei ein Eye Tracking System vorgesehen ist, damit die Videokamera das Bild aufnimmt, was das Individiuum mit seinen Augen sieht.

2. Steuerbare Beleuchtungseinheit nach einem der vorherigen Ansprüche,
**dadurch gekennzeichnet,**
**dass** in den Meldungen der Kommunikationselemente zusätzlich Hinweise auf die Position, die Beleuchtung, die Art der Sehaufgabe oder das Befinden des Individuums enthalten sind.

3. Steuerbare Beleuchtungseinheit nach einem der vorherigen Ansprüche,
**dadurch gekennzeichnet,**
**dass** aufgrund der Steuerinformationen Leuchten oder Leuchtengruppen der Beleuchtungsanlage zurückdimmbar oder abstellbar ist/sind, wenn kein Individuum als anwesend gemeldet wird oder Abstand eines gemeldeten Individuums einen Grenzwert überschreitet.

4. Steuerbare Beleuchtungseinheit nach einem der vorherigen Ansprüche,
**dadurch gekennzeichnet,**
**dass** aufgrund der Steuerinformationen die Abstrahlcharakteristik der Leuchten oder Leuchtengruppen zwecks Vermeidung von Blendung veränderbar ist.

5. Steuerbare Beleuchtungseinheit nach einem der vorherigen Ansprüche,
**dadurch gekennzeichnet,**
**dass** die Videokamera miniaturisiert ist und an der Stirn eines Individuums befestigbar ist.

6. Steuerbare Beleuchtungseinheit nach einem der vorherigen Ansprüche,
**dadurch gekennzeichnet,**
**dass** die von der Videokamera abgegebenen Bildinformationssignale über eine Bildauswertungssoftware ausgewertet wird, um **dadurch** die Sehaufgabe oder eine evtl. vorhandene Blendung erkennbar zu machen.

7. Steuerbare Beleuchtungseinheit nach einem der vorherigen Ansprüche,
**dadurch gekennzeichnet,**
**dass** die Kommunikationselemente dazu ausgebildet sind, Informationen über die Gehirnströme der ihnen zugeordneten Individuen an die Beleuchtungsanlage weiterzuleiten, um damit eine Blendung der Individuen zu vermeiden.

8. Verfahren zur Steuerung einer Beleuchtungsanlage für Räume oder außen liegende Bereiche, in denen sich Individuen aufhalten können,
wobei jedem Individuum ein Kommunikationselement zugeordnet ist, das zur aktiven oder passiven Kommunikation mit der Beleuchtungsanlage geeignet ist und die Anwesenheit des Individuums und gegebenenfalls seine Zugehörigkeit zu einer Gruppe von Individuen meldet,
und wobei in der Beleuchtungsanlage individuumspezifische oder gruppenspezifische Steuerinformationen gespeichert sind, die bei Meldung der Anwesenheit oder fehlender Meldung einer Anwesenheit abgerufen und in Steuerbefehle für die Beleuchtungsanlage umgesetzt werden,
**dadurch gekennzeichnet**
**dass** das Kommunikationselement eine Videokamera ist, die so an dem Individuum angebracht ist, dass sie der Blickrichtung des Individuums folgt.

9. Verfahren nach Anspruch 8,
bei dem die Kommunikationselemente am Körper der Individuen getragen werden.

10. Verfahren nach Anspruch 8 oder 9,
bei dem aufgrund der Steuerinformationen Leuchten oder Leuchtengruppen der Beleuchtungsanlage zurückgedimmt oder abgestellt werden, wenn kein Individuum als anwesend gemeldet wird oder der Abstand eines gemeldeten Individuums einen Grenzwert überschreitet.

11. Verfahren nach einem der Ansprüche 8 bis 10,
bei dem aufgrund der Steuerinformationen die Abstrahlcharakteristik der Leuchten oder Leuchtengruppen zwecks Vermeidung von Blendung verändert wird.

12. Verfahren nach einem der Ansprüche 8 bis 11,
bei dem die von der Videokamera abgegebenen Bildinformationssignale über eine Bildauswertungssoftware ausgewertet werden, um **dadurch** die Sehaufgabe oder eine evtl. vorhandene Blendung erkennbar zu machen.

13. Verfahren nach einem der Ansprüche 8 bis 12,
bei dem den Kommunikationselementen Informationen über die Gehirnströme der ihnen zugeordneten Individuen zugeführt werden, die von den Kommunikationselementen an die Beleuchtungsanlage weitergeleitet werden, um damit eine Blendung der Individuen zu vermeiden.

## Claims

1. A controllable lighting installation for rooms or outside areas which may be occupied by individuals, having:
communication elements which are designed in such a way that one of the communication elements can be associated with each individual, wherein the communication element is suitable for active or passive communication with the lighting installation and reports the presence of the individual and, as the case may be, whether he belongs to a group of individuals, and that there are stored, in the lighting installation, items of control information which are specific to the individual or group and which are accessed, if a presence is reported or if there is no report of a presence, and converted into control commands for the lighting installation,
**characterised in that**
the communication element is a video camera which is integrated into a pair of glasses or a headset and can thus be attached to the individual in such a way that it follows the individual's line of vision,
wherein an eye-tracking system is provided so that the video camera takes the picture that the individual is seeing with his or her eyes.

2. A controllable lighting unit according to one of the preceding claims,
**characterised in that**
the reports from the communication elements additionally contain indications as to the position, the lighting, the nature of the visual task or the condition of the individual.

3. A controllable lighting unit according to one of the preceding claims,
**characterised in that,**
on the basis of the items of control information, lights or groups of lights belonging to the lighting installation can be dimmed or turned off if no individual is reported as being present or if the distance from a reported individual exceeds a limiting value.

4. A controllable lighting unit according to one of the preceding claims,
**characterised in that**
the radiation characteristic of the lights or groups of light can be varied, on the basis of the items of control information, for the purpose of avoiding glare.

5. A controllable lighting unit according to one of the preceding claims,
**characterised in that**
the video camera is miniaturised and can be fastened to the forehead of an individual.

6. A controllable lighting unit according to one of the preceding claims,
**characterised in that**
the picture information signals emitted by the video camera can be evaluated via image-evaluating software, in order thereby to make it possible to identify the visual task or any glare which may be present.

7. A controllable lighting unit according to one of the preceding claims,
**characterised in that**
the communication elements are designed to pass on to the lighting installation items of information about the brain waves of the individuals associated with them, in order thereby to avoid dazzling the individuals.

8. A method of controlling a lighting installation for rooms or outside areas which may be occupied by individuals, wherein there is associated with each individual a communication element which is suitable for active or passive communication with the lighting installation and which reports the presence of the individual and, as the case may be, whether he belongs to a group of individuals,
and wherein there are stored, in the lighting installation, items of control information which are specific to the individual or group and which are accessed, if a presence is reported or if there is no report of a presence, and converted into control commands for the lighting installation,
**characterised in that**
the communication element is a video camera which is attached to the individual in such a way that it follows the individual's line of vision.

9. A method according to claim 8,
in which the communication elements are carried on the body of the individuals.

10. A method according to claim 8 or 9,
in which, on the basis of the items of control information, lights or groups of lights belonging to the lighting installation can be dimmed or turned off if no individual is reported as being present or if the distance from a reported individual exceeds a limiting value.

11. A method according to one of claims 8 to 10,
in which the radiation characteristic of the lights or groups of lights is varied, on the basis of the items of control information, for the purpose of avoiding glare.

12. A method according to one of claims 8 to 11,
in which the picture information signals emitted by the video camera are evaluated via image-evaluating software, in order thereby to make it possible to identify the visual task or any glare which may be present.

13. A method according to one of claims 8 to 12,
in which there are fed to the communications elements items of information about the brain waves of the individuals associated with them, which items are passed on to the lighting installation by the communication elements in order thereby to avoid dazzling the individuals.

## Revendications

1. Installation d'éclairage contrôlable pour des locaux ou des zones situées à l'extérieur, dans lesquels des individus peuvent séjourner, présentant
des éléments de communication, qui sont conçus de telle sorte que l'un des éléments de communication peut être attribué à chaque individu, l'élément de communication étant approprié pour la communication active ou passive avec l'installation d'éclairage et signalant la présence d'un individu et éventuellement son appartenance à un groupe d'individus, et en ce que dans l'installation d'éclairage sont stockées des informations de commande spécifiques à l'individu ou spécifiques au groupe, qui sont appelées en cas de signalement de la présence ou en cas d'absence de signalement d'une présence et sont converties en instructions de commande pour l'installation d'éclairage,
**caractérisée en ce que**
l'élément de communication est une caméra vidéo intégrée dans les lunettes ou un microcasque, qui peut être placée sur l'individu de telle sorte qu'elle suit le sens du regard de l'individu,
un Eye Tracking System (système de poursuite du regard) étant prévu, pour que la caméra vidéo enregistre l'image que l'individu voit avec ses yeux.

2. Unité d'éclairage contrôlable selon l'une quelconque des revendications précédentes,
**caractérisée en ce que**
les messages des éléments de communication contiennent en supplément des informations sur la position, l'éclairage, l'objet de l'observation ou l'état de santé de l'individu.

3. Unité d'éclairage contrôlable selon l'une quelconque des revendications précédentes,
**caractérisée en ce que,**
sur la base des informations de commande, des luminaires ou des groupes de luminaires de l'installation d'éclairage peuvent être réduits en intensité ou arrêtés si aucun individu n'est signalé présent ou si la distance à un individu signalé dépasse une valeur limite.

4. Unité d'éclairage contrôlable selon l'une quelconque des revendications précédentes,
**caractérisée en ce que,**
sur la base des informations de commande, la caractéristique de rayonnement des luminaire ou des groupes de luminaires peut être modifiée afin d'éviter un éblouissement.

5. Unité d'éclairage contrôlable selon l'une quelconque des revendications précédentes,
**caractérisée en ce que**
la caméra vidéo est miniaturisée et peut être fixée sur le front d'un individu.

6. Unité d'éclairage contrôlable selon l'une quelconque des revendications précédentes,
**caractérisée en ce que**
les décisions d'information d'image délivrées par la caméra vidéo sont analysées au moyen d'un logiciel d'analyse d'image, afin de rendre ainsi identifiable l'objet de l'observation ou un éblouissement éventuellement présent.

7. Unité d'éclairage contrôlable selon l'une quelconque des revendications précédentes,
**caractérisée en ce que**
les éléments de communication sont conçus pour transmettre des informations sur les flux cérébraux des individus qui leur sont attribués à l'installation d'éclairage, afin d'éviter ainsi un éblouissement des individus.

8. Procédé pour contrôler une installation d'éclairage pour des locaux ou des zones situées à l'extérieur dans lesquels des individus peuvent séjourner,
un élément de communication étant attribué à chaque individu, lequel convient la communication active ou passive avec l'installation d'éclairage et signale la présence d'un individu et éventuellement son appartenance à un groupe d'individus,
et des informations de commande spécifiques à l'individu ou spécifiques au groupe étant mémorisées dans l'installation d'éclairage, lesquelles sont appelées en cas de signalement de la présence ou en cas d'absence de signalement d'une présence et étant converties en instructions de commande pour l'installation d'éclairage,
**caractérisé en ce que**
l'élément de communication est une caméra vidéo qui est placée ainsi sur l'individu de façon qu'elle suive la direction du regard de l'individu.

9. Procédé selon la revendication 8,
avec lequel les éléments de communication sont portés sur le corps de l'individu.

10. Procédé selon la revendication 8 ou 9,
avec lequel, sur la base des informations de commande, des luminaires ou groupes de luminaires de l'installation d'éclairage sont réduits en intensité ou arrêtés si aucun individu n'est signalé présent ou si la distance à un individu signalé dépasse la valeur limite.

11. Procédé selon l'une quelconque des revendications 8 à 10,
avec lequel, sur la base des informations de commande, la caractéristique de rayonnement des luminaires ou groupes de luminaires est modifiée afin d'éviter un éblouissement.

12. Procédé selon l'une quelconque des revendications 8 à 11,
avec lequel les signaux d'informations d'image émis par la caméra vidéo, sont analysés au moyen d'un logiciel d'analyse d'images, afin de rendre ainsi identifiable l'objet de l'observation ou un éblouissement éventuellement présent.

13. Procédé selon l'une quelconque des revendications 8 à 12,
avec lequel des informations concernant les flux cérébraux des individus qui leur sont attribués sont amenées aux éléments de communication, lesquelles sont transmises par les éléments de communication à l'éclairage, afin d'éviter ainsi un éblouissement des individus.
